# EUROPÄISCHE PATENTSCHRIFT

(11) **EP 3 398 771 B1**
(45) Veröffentlichungstag und Bekanntmachung des Hinweises auf die Patenterteilung: **11.10.2023**
(21) Anmeldenummer: 18170864.5
(22) Anmeldetag: 04.05.2018
(51) Int. Cl.: B32B 27/08, B32B 27/30, B32B 27/32, B32B 27/36, B65D 65/40, C08J 5/18, C08J 7/04

(54) **KUNSTSTOFFFOLIE**
PLASTIC FILM
FILM PLASTIQUE

(30) Priorität: 04.05.2017 DE 102017109567
(43) Veröffentlichungstag der Anmeldung: 07.11.2018
(73) Patentinhaber: Südpack Verpackungen GmbH & Co. KG, 88416 Ochsenhausen (DE)
(72) Erfinder: Grimbacher, Carolin, 88416 Ochsenhausen (DE)
(74) Vertreter: Patentanwaltzkanzlei Hutzelmann

(56) Entgegenhaltungen:
- EP-A1- 2 727 724
- JP-A- 2001 192 070

## Beschreibung

Die Erfindung bezieht sich auf eine tiefziehfähige Kunststofffolie mit wenigstens einer Schicht insbesondere zum Einsatz für Schalen im Lebensmittelbereich, wobei wenigstens eine Schicht der Kunststofffolie aus PET, A-PET oder PP, Polystyrol und deren Mischungen besteht.

Es sind verschiedene derartige Kunststofffolien bekannt, die oftmals aus mehreren Lagen mit unterschiedlichen Materialien bestehen. Barriereschichten sind oftmals gefordert.

Beispielsweise aus der EP 2 727 724 A1 ist beispielsweise eine Folie der gattungsgemäßen Art bekannt.

Diese Kunststofffolien sind in der Regel nicht mehr oder nur mit sehr großem Aufwand recycelbar.

Der Erfindung liegt die Aufgabe zugrunde, eine Kunststofffolie vorzuschlagen, die zur Herstellung derartiger Schalen geeignet ist.

Diese Aufgabe wird erfindungsgemäß dadurch gelöst, daß eine Barriereschicht vorgesehen ist, wobei die Barriereschicht an der Oberfläche der Kunststofffolie angeordnet ist.

Die verwendeten Materialien sind sehr gut recycelbar, können aber auch sehr gut tiefgezogen werden. Diese Materialien können auch als Mono-Layer eingesetzt werden. Die Verwendung nicht oder nur geringfügig vorgereckter Materialien ist vorteilhaft.

Mit ungereckten oder nicht biaxial gereckten Kunststofffolien wurden beste Ergebnisse erzielt.

Durch die Barriereschicht sind auch empfindliche Waren, insbesondere Lebensmittel verpackbar. Die Barriere kann beispielsweise als Sauerstoffbarriere ausgeführt sein.

Als Barriereschicht ist Polyvinylalkohol (PVOH) vorgesehen.

PVOH weist sehr gute Hochbarriereeigenschaften auf.

Äußerst vorteilhaft ist es gemäß einer weiteren Ausgestaltung der Erfindung auch, wenn die Barriereschicht als Beschichtung aufgebracht ist.

Ebenfalls sehr vorteilhaft ist es, wenn die Barriereschicht aufgesprüht, mit einer Walze aufgetragen, wobei auch eine Rasterwalze denkbar ist oder aufgedruckt ist.

Hiermit kann eine sehr dünne und/oder gleichmäßige Barriereschicht auf der Trägerfolie vorgesehen werden.

Zudem ist die Barriereschicht teilvernetzt.

Damit wird ein unerwünschtes Abwaschen der Barriereschicht in feuchten Umgebungen wenigstens weitgehend vermieden.

Dabei hat es sich als sehr vorteilhaft herausgestellt, wenn die Barriereschicht mit einem Vernetzer versehen ist.

Durch einen zugesetzten Vernetzer kann der Vernetzungsgrad sehr gut gesteuert werden.

Eine weitere sehr vorteilhafte Ausgestaltung der Erfindung liegt vor, wenn zwischen der Folienschicht und der darauffolgenden Barriereschicht ein Primer vorgesehen und/ oder wenn die zu beschichtende Seite der Kunststofffolie mittels Corona- oder Plasmabehandlung vorbehandelt ist.

Hierdurch wird die Haftung zwischen Barriereschicht und Trägermaterial verbessert. Dies erhöht auch die Widerstandsfähigkeit der Barriereschicht vor allem im Hinblick auf mechanische Beanspruchung.

Eine weitere sehr vorteilhafte Fortbildung der Erfindung liegt auch vor, wenn das Auftragsgewicht der Barriereschicht zwischen 0,2 und 5 g/m² (trocken), vorzugsweise zwischen 0,4 und 3 g/m², besonders bevorzugt zwischen 0,5 und 3 g/m² beträgt.

Das Barrierematerial ist in der Regel teuer. Damit werden möglichst dünne Beschichtungen angestrebt. PVOH ist ein Hochbarrierematerial und so besonders gut geeignet.

Erfindungsgemäß ist es auch sehr vorteilhaft, wenn der Hydrolysegrad des PVOH zwischen 50 und 99,9%, vorzugsweise zwischen 70 und 99,9%, besonders bevorzugt zwischen 90 und 99% beträgt.

Durch den Hydrolysegrad wird die Wasserlöslichkeit der PVOH Barriere beeinflusst. Durch einen höheren Hydrolysegrad wird die Wasserlöslichkeit herabgesetzt.

Weiterhin ist es erfindungsgemäß sehr vorteilhaft, wenn die Viskosität des Barrierematerials zwischen 1 und 1500 mPas*s beträgt.

Je nach gewünschter Beschichtung können so gleichmäßige, das heisst Pinhole freie Beschichtungen vorgesehen sein.

Die erfindungsgemäße Kunststofffolie wird besonders bevorzugt derart hergestellt, daß die Barriereschicht auf die Schicht, die als Trägerfolie dient, aufgesprüht, mittels Walze aufgetragen, wobei eine Rasterwalze eingesetzt werden kann, oder aufgedruckt wird.

Damit wird eine gleichmäßige Barriereschicht ohne Fehlstellen erzeugt.

Besonders vorteilhaft ist es dabei auch, wenn die aufgetragene Barriereschicht getrocknet wird, wobei eine Trocknung von der Rückseite der Trägerfolie ausgeführt werden kann.

Hierdurch wird ein Film gebildet, der auch beim Tiefziehen der Folie mitsamt der Barriereschicht nicht aufreisst und keine Fehlstellen bildet. In der Regel wird konventionell über Strahler oder Trockner getrocknet. Eine rückseitige Trocknung ist denkbar und kann in Kombination oder Alternativ durchgeführt werden. Durch eine rückseitige Trocknung wird vermieden, daß sich ein Oberflächenfilm bildet, der beim Entweichen der Lösungsmittel des Barrierematerials diesen Oberflächenfilm zerreist und so für Fehlstellen in der Barriereschicht sorgt.

Dabei hat es sich als sehr vorteilhaft erwiesen, wenn eine Temperung vorgesehen ist, nachdem die Barriereschicht auf der Schicht, die als Trägerfolie dient, aufgebracht ist.

Damit wird der Barriereschicht gleich nach dem Auftrag eine Mindest-Stabilität gegeben.

Eine erfindungsgemäß besonders vorteilhafte Verwendung einer erfindungsgemäßen Kunststofffolie liegt vor, wenn die Kunststofffolie zur Herstellung von Deckeln oder tiefgezogenen Schalen insbesondere im Lebensmittelbereich eingesetzt wird.

Gerade im Bereich der gekühlten Lebensmittel ist eine solche Schale bzw. ein Deckel bzw. Kombinationen einsetzbar.

Besonders vorteilhaft ist es erfindungsgemäß, wenn die Kunststofffolie nach Verwendung recycelbar ist.

Die Barriereschicht lässt sich, gesteuert durch den Hydrolysegrad wieder ablösen. Das Basismaterial kann sortenrein recycelt werden. Auch wenn die Barriereschicht auf der Folie verbleibt, ist diese so dünn, dass diese unter die 5% Hürde fällt und so die Folie als sortenrein betrachtet werden kann. Dies ist durch das geringe Auftragsgewicht und die darauf folgende Verstreckung und somit Verdünnung beim Tiefziehen begründet.

Im folgenden wird die Erfindung anhand eines Ausführungsbeispiels veranschaulicht.

Dabei zeigen:
- Fig. 1: eine erfindungsgemäße Folie mit einer Trägerfolie und einer Barriereschicht, und
- Fig. 2: eine tiefgezogene Schale aus der erfindungsgemäßen Folie.

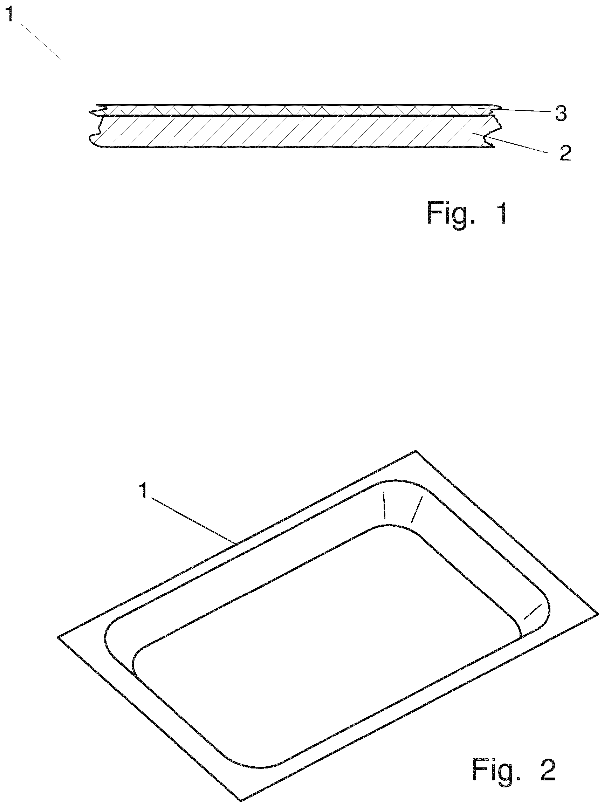

Mit 1 ist in Fig. 1 eine Folienanordnung mit einer Trägerfolienschicht 2 und einer darauf angeordneten Barriereschicht 3 bezeichnet.

Als Trägerfolienschicht 2 sind ein- oder mehrschichtige Kunststofffolien, enthaltend PET, A-PET, PP, Polystyrol und/oder deren Mischungen und Blends vorgesehen.

Die Trägerfolienschicht 2 ist zunächst ungereckt, höchstens leicht vorgereckt vorgesehen.

Auf die Trägerfolienschicht 2 wird ein Hochbarrierematerial, nämlich PVOH aufgebracht, wobei eine Beschichtung, aber auch ein Aufextrudieren denkbar ist. Bei einer Beschichtung kann diese beispielsweise aufgesprüht, aufgedruckt oder mittels einer glatten oder gerasterten Walze aufgetragen werden. Andere Formen des Auftrags sind denkbar.

PVOH weisst hervorragende Hochbarriereeigenschaften auf. Barrieren unter anderem gegen Sauerstoff können so hergestellt werden.

Der Bereich der Barriere liegt zwischen 0,015 - 5 cm³/(m^{2 ∗} Tag) bei 23°C und 50% relativer Luftfeuchte, gemessen an der Flachfolie. Die Messung erfolgt dabei nach DIN53380-3.

Zwischen der Trägerfolienschicht 2 und der Barriereschicht 3 kann ein Haftvermittler, Primer oder dergleichen vorgesehen werden.

Im Barrierematerial kann auch ein Vernetzer vorgesehen werden, welcher dafür sorgt, daß ein vorgegebener Vernetzungsgrad erreicht wird.

PVOH neigt dazu, gerade in feuchten Umgebungen leicht abwaschbar zu sein, was bei einer Barriereschicht vor allem bei Lebensmittelverpackungen unter anderem im Tiefkühlbereich unerwünscht ist.

Mit dem oben stehenden Vernetzer kann dem entgegen gewirkt werden.

Auch durch eine besonders gute Haftung des Barrierematerials auf der Trägerfolienschicht 2 kann dem ebenfalls entgegengewirkt werden.

Desweiteren wird die Stabilität der Barriereschicht 3 sehr gut beherrsch- und einstellbar, wenn die aufgetragene Barriereschicht gleich nach dem Auftrag getrocknet wird.

Dabei hat sich eine Trocknung von der Rückseite der Trägerfolienschicht 2 her besonders bewährt, weil so vermieden wird, daß sich ein Oberflächenfilm bildet, der beim Entweichen von im Barrierematerial enthaltenem Löschungsmittel wieder aufgerissen wird. Fehlstellen im Barrierematerial können so wirksam vermieden werden.

Zudem kann eine Temperung vorgesehen werden, wodurch nicht nur die Vernetzung, sondern auch die gesamte Stabilität der Barriere gesteuert und eingestellt werden kann.

Durch alle diese Maßnahmen kann eine sehr dünne aber dennoch gleichmäßige Barriereschicht ohne Fehlstellen erzeugt werden.

Sehr dünn heisst hier, daß das Auftragsgewicht der Barriereschicht zwischen 0,2 und 5 g/m² (trocken), vorzugsweise zwischen 0,4 und 3 g/m², besonders bevorzugt zwischen 0,5 und 3 g/m² beträgt.

Das bedeutet wiederum, daß der Anteil des Barrierematerials an der Gesamtfolie in der Regel < 1% ist. Damit liegt der Anteil des Barrierematerials unter der 5% Hürde, weswegen das Basismaterial als sortenrein betrachtet werden kann und so sortenrein recycelbar ist.

Damit kann nicht nur Material, sondern auch Kosten gespart werden. PVOH ist als Hochbarrierematerial teuer.

Besonders gute Barriereschichten haben sich bei PVOH erzeugen lassen, wenn der Hydrolysegrad des PVOH zwischen 50 und 99,9%, vorzugsweise zwischen 70 und 99,9%, besonders bevorzugt zwischen 90 und 99% beträgt.

Durch den Hydrolysegrad wird die Wasserlöslichkeit der PVOH Barriere beeinflusst. Durch einen höheren Hydrolysegrad wird die Wasserlöslichkeit herabgesetzt. Dadurch lassen sich Barriereschichten erzeugen, die beispielsweise mit heißem Wasser von der Trägerfolie abgewaschen werden können. Somit kann echte Sortenreinheit erreicht werden.

Beim Auftrag des Barrierematerials ist es besonders empfehlenswert, wenn die Viskosität des Barrierematerials zwischen 1 und 1500 mPas*s beträgt, wodurch sich sehr dünne, aber dennoch gleichmäßige und fehlstellenfreie Beschichtungen erzeugen lassen.

Durch die Verwendung von ungereckten oder nur geringfügig vorgereckten Trägerfolien 2 lässt sich der Verbund aus Trägerfolie 2 und Barrierematerial 3 tiefziehen, wodurch Schalen und Deckel hergestellt werden können.

Durch die gleichmäßige und in sich stabile, weil vernetzte Barriereschicht 3 reisst die Barriereschicht 3 beim Tiefziehen nicht auf, so daß die Barriereeigenschaften erhalten bleiben.

Es wird somit eine echte umweltfreundliche Alternative zu bekannten, nur schwer recycelbaren Verpackungen im Lebensmittelbereich geschaffen.

## Patentansprüche

1. Tiefziehfähige Kunststofffolie (1) mit wenigstens einer Schicht (2) insbesondere zum Einsatz für Schalen im Lebensmittelbereich, wobei wenigstens eine Schicht (2) der Kunststofffolie (1) aus PET, A-PET oder PP, Polystyrol und deren Mischungen besteht, wobei die Kunststofffolie (1) ungereckt oder nicht biaxial gereckt ist, **dadurch gekennzeichnet, daß** eine Barriereschicht (3) vorgesehen ist, wobei die Barriereschicht (3) an der Oberfläche der Kunststofffolie (1) angeordnet ist und daß als Barriereschicht (3) Polyvinylalkohol (PVOH) vorgesehen ist, und daß die Barriereschicht (3) vor oder nach dem Aufbringen wenigstens teilvernetzt wurde.

2. Kunststofffolie nach Anspruch 1, **dadurch gekennzeichnet, daß** die Barriereschicht (3) als Beschichtung aufgebracht ist, wobei die Barriereschicht (3) aufgesprüht, mit einer Walze aufgetragen sein kann, wobei auch eine Rasterwalze denkbar ist oder aufgedruckt sein kann.

3. Kunststofffolie nach Anspruch 1 oder 2, **dadurch gekennzeichnet, daß** die Barriereschicht (3) mit einem Vernetzer versehen ist.

4. Kunststofffolie nach einem der Ansprüche 1 bis 3, **dadurch gekennzeichnet, daß** zwischen der Folienschicht (2) und der darauffolgenden Barriereschicht (3) ein Primer vorgesehen und/oder daß die zu beschichtende Seite der Kunststofffolie (2) mittels Corona- oder Plasmabehandlung vorbehandelt ist.

5. Kunststofffolie nach einem der Ansprüche 1 bis 4, **dadurch gekennzeichnet, daß** das Auftragsgewicht der Barriereschicht (3) zwischen 0,2 und 5 g/m² (trocken), vorzugsweise zwischen 0,4 und 3 g/m², besonders bevorzugt zwischen 0,5 und 2 g/m² beträgt.

6. Kunststofffolie nach einem der Ansprüche 1 bis 5, **dadurch gekennzeichnet, daß** der Hydrolysegrad des PVOH zwischen 50 und 99,9 %, vorzugsweise zwischen 70 und 99,9%, besonders bevorzugt zwischen 90 und 99% beträgt.

7. Kunststofffolie nach einem der Ansprüche 1 bis 6, **dadurch gekennzeichnet, daß** die Viskosität des Barrierematerials zwischen 1 und 1500 mPas*s beträgt.

8. Verfahren zur Herstellung einer Kunststofffolie (1) nach einem der vorangehenden Ansprüche, **dadurch gekennzeichnet, daß** die Barriereschicht (3) auf die Schicht (2), die als Trägerfolie dient, aufgesprüht, mittels Walze aufgetragen, wobei eine Rasterwalze eingesetzt werden kann, oder aufgedruckt wird.

9. Verfahren nach Anspruch 8, **dadurch gekennzeichnet, daß** die aufgetragene Barriereschicht (3) getrocknet wird, wobei eine Trocknung von der Rückseite der Trägerfolie ausgeführt werden kann.

10. Verfahren nach Anspruch 8 oder 9, **dadurch gekennzeichnet, daß** eine Temperung vorgesehen ist, nachdem die Barriereschicht (3) auf der Schicht (2), die als Trägerfolie dient aufgebracht ist.

11. Verwendung einer Kunststofffolie nach einem der vorangehenden Ansprüche, **dadurch gekennzeichnet, daß** die Kunststofffolie (1) zur Herstellung von Deckeln oder tiefgezogenen Schalen insbesondere im Lebensmittelbereich eingesetzt wird.

12. Verwendung nach Anspruch 11, **dadurch gekennzeichnet, daß** die Kunststofffolie (1) nach Verwendung recycelbar ist.

## Claims

1. Plastics material sheet (1), which is capable of deep-drawing, with at least one layer (2), particularly for use for dishes in the field of foodstuffs, wherein at least one layer (2) of the plastics material sheet (1) consists of PET, A-PET or PP, polystyrol and mixtures thereof, wherein the plastics material sheet (1) is unstretched or non-biaxially stretched, **characterised in that** a barrier layer (3) is provided, wherein the barrier layer (3) is arranged at the surface of the plastics material sheet (1) and that polyvinylalcohol (PVOH) is provided as barrier layer (3) and that the barrier layer (3) was at least partly cross-linked before or after application.

2. Plastics material sheet according to claim 1, **characterised in that** the barrier layer (3) is applied as a coating, wherein the barrier layer (3) can be sprayed on, can be coated by a roller, wherein an anilox roller is also conceivable, or can be printed on.

3. Plastics material sheet according to claim 1 or 2, **characterised in that** the barrier layer (3) is provided with a cross-linking agent.

4. Plastics material sheet according to any one of claims 1 to 3, **characterised in that** a primer is provided between the sheet layer (2) and the barrier layer (3) following thereon and/or that the side, which is to be coated, of the plastics material sheet (2) is pre-treated by means of a corona or plasma treatment.

5. Plastics material sheet according to any one of claims 1 to 4, **characterised in that** the coating weight of the barrier layer (3) is between 0.2 and 5 g/m² (dry), preferably between 0.4 and 3 g/m², particularly preferably between 0.5 and 2 g/m².

6. Plastics material sheet according to any one of claims 1 to 5, **characterised in that** the degree of hydrolysis of the PVOH is between 50 and 99.9%, preferably between 70 and 99.9%, particularly preferably between 90 and 99%.

7. Plastics material sheet according to any one of claims 1 to 6, **characterised in that** the viscosity of the barrier material is between 1 and 1500 mPas*s.

8. Method of producing a plastics material sheet (1) according to any one of the preceding claims, **characterised in that** the barrier layer (3) is sprayed onto the layer (2), which serves as carrier sheet, coated by means of roller, wherein an anilox roller can be used, or is printed on.

9. Method according to claim 8, **characterised in that** the coated barrier layer (3) is dried, wherein drying can be carried out from the rear side of the carrier sheet.

10. Method according to claim 8 or 9, **characterised in that** tempering is provided after the barrier layer (3) has been coated on the layer (2) serving as carrier sheet.

11. Use of a plastics material sheet according to any one of the preceding claims, **characterised in that** the plastics material sheet (1) is used for producing lids or deep-drawn dishes particularly in the field of foodstuffs.

12. Use according to claim 11, **characterised in that** the plastics material sheet (1) is recyclable after use.

## Revendications

1. Feuil (1) de matière plastique apte à l'emboutissage profond, muni d'au moins une couche (2) et notamment dévolu à l'utilisation pour des barquettes dans le domaine alimentaire, au moins une couche (2) dudit feuil (1) de matière plastique étant constituée de PET de A-PET ou de PP, de polystyrène et de mélanges de ces derniers, lequel feuil (1) de matière plastique est non étiré, ou non soumis à étirage biaxial, **caractérisé par** la présence d'une couche barrière (3), laquelle couche barrière (3) est disposée à la surface du feuil (1) de matière plastique ; par le fait que de l'alcool polyvinylique (PVOH) est prévu en tant que couche barrière (3) ; et par le fait que ladite couche barrière (3) a été au moins partiellement réticulée avant ou après l'application.

2. Feuil de matière plastique selon la revendication 1, **caractérisé par le fait que** la couche barrière (3) est appliquée en tant que revêtement, ladite couche barrière (3) pouvant être pulvérisée, être appliquée à l'aide d'un rouleau, un rouleau tramé étant également envisageable, voire être imprimée.

3. Feuil de matière plastique selon la revendication 1 ou 2, **caractérisé par le fait que** la couche barrière (3) est pourvue d'un agent de réticulation.

4. Feuil de matière plastique selon l'une des revendications 1 à 3, **caractérisé par le fait qu'**un apprêt est prévu entre la couche (2) de feuil et la couche barrière (3) succédant à cette dernière ; et/ou **par le fait que** la face dudit feuil (1) de matière plastique, devant être revêtue, est prétraitée au moyen d'un traitement corona ou plasma.

5. Feuil de matière plastique selon l'une des revendications 1 à 4, **caractérisé par le fait que** le poids d'application de la couche barrière (3) est compris entre 0,2 et 5 g/m² (état sec), préférentiellement entre 0,4 et 3 g/m², entre 0,5 et 2 g/m² avec préférence particulière.

6. Feuil de matière plastique selon l'une des revendications 1 à 5, **caractérisé par le fait que** le taux d'hydrolyse du PVOH est compris entre 50 et 99,9 %, préférentiellement entre 70 et 99,9 %, entre 90 et 99 % avec préférence particulière.

7. Feuil de matière plastique selon l'une des revendications 1 à 6, **caractérisé par le fait que** la viscosité du matériau formant barrière est comprise entre 1 et 1 500 mPa*s.

8. Procédé de fabrication d'un feuil (1) de matière plastique conforme à l'une des revendications précédentes, **caractérisé par le fait que** la couche barrière (3) est pulvérisée, est appliquée à l'aide d'un rouleau, un rouleau tramé étant également envisageable, voire est imprimée sur la couche (2) servant de feuil substrat.

9. Procédé selon la revendication 8, **caractérisé par le fait que** la couche barrière (3) appliquée est séchée, sachant qu'un séchage peut être opéré depuis la face postérieure du feuil substrat.

10. Procédé selon la revendication 8 ou 9, **caractérisé par le fait qu'**un étuvage est prévu une fois la couche barrière (3) appliquée sur la couche (2) servant de feuil substrat.

11. Utilisation d'un feuil (1) de matière plastique conforme à l'une des revendications précédentes, **caractérisée par le fait que** le feuil (1) de matière plastique est employé pour la production de couvercles ou de barquettes embouties en profondeur, notamment dans le domaine alimentaire.

12. Utilisation selon la revendication 11, **caractérisée par le fait que** le feuil (1) de matière plastique peut être recyclé après emploi.
